# EUROPÄISCHE PATENTANMELDUNG

(11) **EP 4 428 108 A2**
(43) Veröffentlichungstag der Anmeldung: **11.09.2024**
(21) Anmeldenummer: 24159697.2
(22) Anmeldetag: 26.02.2024
(51) Int. Cl.: C03C 3/097, C03C 10/00

(54) **GLASKERAMIK MIT VERBESSERTER ANZEIGEFÄHIGKEIT UND VERBESSERTEM DEADFRONT-EFFEKT**

(30) Priorität: 10.03.2023 DE 102023106007
(71) Anmelder: SCHOTT AG, 55122 Mainz (DE)
(72) Erfinder: WEISS, Evelin, 55122 Mainz (DE); SCHÖNBERGER, Klaus, 55122 Mainz (DE); JAKOB, Udo, 55122 Mainz (DE); LANGER, Philipp, 55122 Mainz (DE); HOCHREIN, Oliver, 55122 Mainz (DE)
(74) Vertreter: Schott Corporate IP

(57) **Zusammenfassung**

Die Erfindung betrifft eine Lithium-Aluminium-Silikat-Glaskeramik mit einem Lichttransmissionsgrad im Bereich von 0,5 % bis 10 % bezogen auf eine Dicke von 4 mm, wobei bezogen auf eine Dicke der Glaskeramik von 4 mm Licht der Normlichtart D65 nach Durchtritt durch die Glaskeramik eine dominante Wellenlänge im Bereich von 590 nm bis 601 nm und eine Farbsättigung von 65 % bis 94 % aufweist.

## Beschreibung

Die Erfindung betrifft eine Glaskeramik mit verbesserter Anzeigefähigkeit und verbessertem Deadfront-Effekt.

In Einrichtungs- und Ausstattungsgegenständen beispielsweise für Küchen und Labore kommen ebene oder dreidimensional verformte Platten aus Glaskeramik in vielfältiger Weise zum Einsatz. So werden Platten aus Glaskeramik beispielsweise als Sichtfenster in Türen von Öfen, als Abdeckplatte von Bedienelementen von Kochgeräten oder als Arbeitsplatte eines Küchenschranks oder Labormöbels, sowohl im privaten als auch im professionellen Umfeld verwendet. Häufig weisen solche Gegenstände zusätzlich Beleuchtungssysteme aus einem oder mehreren Leuchtelementen auf, die beispielsweise zur Darstellung eines Betriebszustandes oder zur dekorativen Beleuchtung vorgesehen sind. Solche Leuchtelemente sind dann so arrangiert, dass sie durch die Platte aus Glaskeramik hindurch leuchten.

Glaskeramiken, die beispielsweise zur Herstellung von Kochflächen mit Leuchtanzeigen verwendet werden können, sind unter anderem aus der EP 2 349 942 A2 und der WO 2014/079929 bekannt.

Die Glaskeramiken aus EP 2 349 942 A2 weisen eine gute farbige Anzeigefähigkeit auf, da sie Transmissionswerte von größer als 0,1 % im Bereich des sichtbaren Lichtes im gesamten Wellenlängenbereich größer als 450 nm aufweisen. Eine farbige Anzeigefähigkeit wird für eine Glaskeramik dann als gegeben angesehen, wenn die Glaskeramik sowohl für rote als auch für andersfarbige Leuchtanzeigen geeignet ist. Bei solchen Glaskeramiken kann die Farbe der Leuchtanzeige durch die Lichtfarbe der Leuchtquelle eingestellt werden.

Durch die hohe Transmission im blauen Spektralbereich von 450 nm bis ca. 500 nm wird zwar die farbige Anzeigefähigkeit verbessert. Gleichzeitig wird aber in Kauf genommen, dass Bauteile, die im Inneren des Kochgerätes verbaut sind, im ausgeschalteten Zustand von einem Nutzer des Kochgerätes deutlicher wahrgenommen werden können. Den Grad der Sichtbarkeit solcher Bauteile im ausgeschalteten Zustand bezeichnet man auch als Deadfront-Effekt. Bei solchen Bauteilen kann es sich beispielsweise um Heizelemente oder Teile von Benutzerschnittstellen wie Leiterplatten oder Kabel handeln. Derartige Glaskeramiken weisen demnach eine verbesserte farbige Anzeigefähigkeit aber einen verschlechterten Deadfront-Effekt auf.

Die Glaskeramiken aus WO 2014/079929 weisen im Unterschied dazu einen sehr hohen Deadfront-Effekt, also eine geringe Sichtbarkeit von Bauteilen, auf. Sie sind jedoch ausschließlich für die Verwendung roter Leuchtanzeigen geeignet. Bei solchen Glaskeramiken kann die Farbe der Leuchtanzeige nicht durch die Lichtfarbe der Leuchtquelle eingestellt werden. Es sind nur rote Leuchtanzeigen möglich.

### Es ist Aufgabe der vorliegenden Erfindung, eine Glaskeramik bereitzustellen, bei der die Farbe von Leuchtanzeigen durch die Wahl des Leuchtmittels variierbar ist, die aber gleichzeitig einen verbesserten Deadfront-Effekt aufweist.

Die Aufgabe wird gelöst durch eine Lithium-Aluminium-Silikat-Glaskeramik gemäß Anspruch 1. Eine solche Glaskeramik weist bezogen auf eine Dicke von 4 mm einen Lichttransmissionsgrad im Bereich von 0,5 % bis 10 % auf. Sie ist dadurch gekennzeichnet, dass bezogen auf eine Dicke der Glaskeramik von 4 mm Licht der Normlichtart D65 nach Durchtritt durch die Glaskeramik eine dominante Wellenlänge im Bereich von 590 nm bis 601 nm und eine Farbsättigung von 65 % bis 94 % aufweist.

Eine Lithium-Aluminium-Silikat-Glaskeramik, kurz LAS-Glaskeramik, enthält als Hauptbestandteile Li₂O, Al₂O₃ und SiO₂. Diese drei Komponenten machen zusammen mehr als 50 Gew.-% der Glaskeramik aus.

Eine erfindungsgemäße LAS-Glaskeramik weist bezogen auf eine Dicke von 4 mm einen Lichttransmissionsgrad im Bereich von 0,5 % bis 10 % auf. Ein Lichttransmissionsgrad von weniger als 0,5 % bezogen auf eine Dicke von 4 mm ist zu niedrig, um Leuchtanzeigen mit handelsüblichen Lichtquellen zu realisieren. Ein Lichttransmissionsgrad von mehr als 10 % bezogen auf eine Dicke von 4 mm ist wiederum zu hoch, um einen verbesserten Deadfront-Effekt zu erzielen.

Der Lichttransmissionsgrad ist dabei gemäß DIN EN 410 zu bestimmen. Die Angabe "bezogen auf eine Dicke von 4 mm" bedeutet dabei, dass die Messung gemäß DIN EN 410 an einer Probe mit einer Dicke von 4 mm durchgeführt werden kann. Alternativ kann die Messung auch an einer Probe mit einer von 4 mm abweichenden Dicke durchgeführt werden. Dann ist für die Bestimmung des Lichttransmissionsgrades das gemessene Transmissionsspektrum unter Verwendung des Lambert-Beerschen Gesetzes auf eine Dicke von 4 mm umzurechnen.

Eine erfindungsgemäße LAS-Glaskeramik ist dadurch gekennzeichnet, dass bezogen auf eine Dicke der Glaskeramik von 4 mm Licht der Normlichtart D65 nach Durchtritt durch die Glaskeramik eine dominante Wellenlänge im Bereich von 590 nm bis 601 nm und eine Farbsättigung von 65 % bis 94 %, bevorzugt von 67 % bis 87%, besonders bevorzugt 69% bis 80%, aufweist.

Licht der Normlichtart D65 weist definitionsgemäß die Farbkoordinaten x = 0,3127, y = 0,3290 im CIExyY Farbraum auf. Bei Durchtritt durch ein absorbierendes Medium wie eine LAS-Glaskeramik mit einem Lichttransmissionsgrad von 0,5 % bis 10 %, werden diese Farbkoordinaten in der Regel verschoben. Die Richtung und das Ausmaß der Verschiebung können über die Parameter der dominanten Wellenlänge und der Farbsättigung beschrieben werden.

Die dominante Wellenlänge von Licht wird vorliegend bestimmt, indem im CIExyY(1931, 2°)-Farbraum eine Verbindungslinie von den x/y-Farbkoordinaten der Normlichtart D65 (0,3127/0,3290) zu den x/y-Farbkoordinaten des Lichtes gezogen und darüber hinaus bis zur Spektralfarblinie verlängert wird. Die Spektralfarblinie ist die Linie, die die Farborte des monochromatischen Lichts im sichtbaren Spektralbereich enthält und die Begrenzung des CIExyY(1931, 2°)-Farbraums darstellt. Jeder Punkt auf der Spektralfarblinie entspricht dem Farbort monochromatischen Lichts einer bestimmten Wellenlänge. Der Schnittpunkt der Verbindungslinie mit der Spektralfarblinie entspricht demnach dem Farbort einer monochromatischen Lichtquelle, die bei einer bestimmten Wellenlänge emittiert. Diese Wellenlänge wird vorliegend als dominante Wellenlänge bezeichnet.

Die Farbsättigung wird ebenfalls aus dieser Verbindungslinie berechnet. Die Farbsättigung entspricht dem Verhältnis des Abstandes von den Farbkoordinaten der Normlichtart D65 zu den Farbkoordinaten des zu charakterisierenden Lichtes zu dem Abstand der Farbkoordinaten der Normlichtart D65 zum Schnittpunkt der Verbindungslinie mit der Spektralfarblinie. Dieser Definition entsprechend weist monochromatisches Licht eine Farbsättigung von 100% auf. Je näher das zu charakterisierende Licht an den Farbkoordinaten der Normlichtart D65 liegt, desto niedriger ist seine Farbsättigung.

Die dominante Wellenlänge und die Farbsättigung bezogen auf eine Dicke der Glaskeramik von 4 mm können erfindungsgemäß auf zwei Arten bestimmt werden: Erstens kann Licht der Normlichtart D65 durch eine Probe der Glaskeramik mit einer Dicke von 4 mm hindurchgeleuchtet werden und der Farbort des transmittierten Lichtes mit einem Farbmessgerät, beispielsweise dem Gerät CS-150 von Konica Minolta, gemessen werden. Zweitens kann das Transmissionsspektrum der Glaskeramik mit einem UV-VIS Spektrophotometer, beispielsweise einem Lambda 850+ Spektrophotometer von PerkinElmer, gemessen und mittels des Lambert-Beerschen Gesetzes auf eine Dicke von 4 mm umgerechnet werden. Mittels der bekannten Vorschriften des CIExyY(2°, 1931)-Farbraums können aus diesem umgerechneten Spektrum dann die Farbkoordinaten von Licht der Normlichtart D65 nach Durchtreten durch die Glaskeramik bestimmt werden. Aus den auf diese Weise bestimmten Farbkoordinaten können dann, wie oben angegeben, die dominante Wellenlänge und die Farbsättigung bestimmt werden.

Bei diesen Parametern handelt es sich also um physikalische Eigenschaften der Glaskeramik, die dazu geeignet sind, die Glaskeramik eindeutig zu charakterisieren.

Es hat sich überraschender Weise gezeigt, dass eine Farbsättigung von mehr als 94 % dazu führt, dass die Farbe von Leuchtanzeigen nicht oder nur geringfügig durch die Wahl des Leuchtmittels variierbar ist. In einem solchen Fall entspricht die Farbe der Leuchtanzeige nach Durchtritt des Lichtes durch die Glaskeramik unabhängig von der Wahl der Farbe des Leuchtmittels im Wesentlichen der Farbe der dominanten Wellenlänge.

Bei einer Farbsättigung von weniger als 65 % hingegen, hat sich empirisch gezeigt, dass der Deadfront-Effekt deutlich verschlechtert ist.

Wie nun festgestellt wurde, ist hingegen bei einer Farbsättigung in einem Bereich von 65% bis 94% und einer dominanten Wellenlänge im Bereich von 590 nm bis 601 nm ein guter Deadfront-Effekt erreichbar, während gleichzeitig die Farbe von unter der Keramik platzierten Leuchtanzeigen durch eine entsprechende Wahl des Leuchtmittels variierbar ist. Insbesondere sind durch die obige Kombination aus Farbsättigung und dominanter Wellenlänge auch Farbeindrücke mit einfachen Mitteln realisierbar, die üblicherweise durch komplexe Kombinationen aus Leuchtmitteln und Farbfiltern realisiert werden müssten. Beispielsweise kann der Farbort einer Leuchtanzeige im Wesentlichen durch ein entsprechendes Leuchtmittel, beispielsweise eine LED, eingestellt werden, das Licht des gewünschten Farbeindrucks emittiert.

Neben der eingangs beschriebenen Verwendung der Glaskeramik als Kochfläche, eignet sich eine erfindungsgemäße Glaskeramik auch für die Verwendung als Kaminsichtscheibe. So führt die erfindungsgemäße Kombination aus dominanter Wellenlänge und Farbsättigung der Glaskeramik dazu, dass eine hinter der Glaskeramik befindliche Flamme in Transmission durch die Glaskeramik einen besonders warmen Farbeindruck aufweist. Gleichzeitig würde in Abwesenheit einer Flamme der Innenraum des entsprechenden Kaminofens durch den Deadfront-Effekt der Glaskeramik verdeckt.

Nach einer bevorzugten Ausführungsform ist dabei ferner vorgesehen, dass die dominante Wellenlänge im Bereich von 593 bis 601 nm, vorzugsweise von 596 bis 601 nm liegt. Weitere bevorzugte Wellenlängenbereiche sind 593 bis 600 nm, 593 bis 599 nm, 596 bis 600 nm, oder 596 bis 599 nm. In diesem Wellenlängenbereich, der einer hellroten bis orangen Farbwahrnehmung entspricht, liegt unter anderem auch der wahrgenommene Farbeindruck eines schwarzen Strahlers bei einer Temperatur von etwa 1000 K. Dementsprechend kann insbesondere bei einer Verwendung der erfindungsgemäßen Glaskeramik in Kombination mit Strahlungsheizelementen der Betriebszustand der Heizelemente aufgrund eines entsprechenden optischen Eindrucks erfasst werden. Eine gesonderte Anzeige, die auf den Betrieb der Strahlungsheizelemente hinweist, ist dabei nicht zwingend erforderlich.

Bezogen auf eine Dicke der Glaskeramik von 4 mm ist nach einer weiteren Ausführungsform vorgesehen, dass der Lichttransmissionsgrad im Bereich von 0,5 bis 4,0 %, vorzugsweise im Bereich 0,8 bis 3,0 %, besonders bevorzugt im Bereich 1,0 bis 2,5 % liegt. Eine Transmission in diesem Bereich unterstützt den Deadfront Effekt der Glaskeramik, während gleichzeitig die Verwendung von optischen Anzeigen möglich bleibt.

Nach einer weiteren Ausführungsform ist, bezogen auf eine Dicke der Glaskeramik von 4 mm, nach einer weiteren Ausführungsform ferner vorgesehen, dass der spektrale Lichttransmissionsgrad im Bereich von 40 % bis 90 %, vorzugsweise im Bereich von 50 % bis 85 %, besonders bevorzugt im Bereich 65 % bis 80 % bei einer Wellenlänge von 1600 nm liegt. Eine hohe Transmission in diesem Wellenlängenbereich begünstigt die Verwendung von Sensoren zur Bestimmung einer Betriebstemperatur einer Kochfläche oder zur Erfassung von Steuerungsbefehlen, die von einem Nutzer über ein berührungsempfindliches Interface an eine Kochfläche übermittelt werden. Ferner findet in diesem Wellenlängenbereich eine Wärmeübertragung von Strahlungsheizkörpern auf ein Kochgeschirr statt, sodass eine hohe Transmission in diesem Wellenlängenbereich vorteilhaft für eine Nutzung der Glaskeramik für ein Kochfeld mit Strahlungsheizelementen ist.

Zur Realisierung der zuvor beschriebenen bevorzugten Materialeigenschaften der erfindungsgemäßen Glaskeramik ist nach einer weiteren Ausführungsform vorgesehen, dass die Glaskeramik 0,0005 - 0,0099 Gew.-% Cr₂O₃, vorzugsweise 0,0010 - 0,0095 Gew.-%, besonders bevorzugt 0,0015 - 0,0090 Gew.-% Cr₂O₃, besonders bevorzugt >0,0025 - 0,0085 Gew.-% Cr₂O₃ enthält. Cr₂O₃ wird dabei in der Regel zur unterstützenden Färbung in Verbindung mit weiteren Hauptfärbemitteln eingesetzt. Überraschenderweise hat sich gezeigt, dass mit einem Gehalt an Cr₂O₃ in den beschriebenen Grenzen eine Glaskeramik realisierbar ist, die die oben formulierte Aufgabe löst.

Nach einer weiteren Ausführungsform ist ferner vorgesehen, dass die Glaskeramik 0,05 - 1 Gew.-%, bevorzugt 0,1 - <0,6 Gew.-% SnO₂, bevorzugt, 0,15 - 0,4 Gew.-% SnO₂, besonders bevorzugt 0,2 - 0,35 Gew.-% SnO₂. Neben seiner Eigenschaft als Läutermittel in der Glaskeramikherstellung hat SnO₂ dabei auch einen Einfluss auf den Farbort von durch die Glaskeramik hindurchtretendem Licht, indem es während der Keramisierung der Glaskeramik dem Färbemittel als Reaktionspartner dient. Dabei wird der Farbeindruck der Glaskeramik wesentlich durch die hierbei stattfindenden Redoxreaktionen beeinflusst.

Nach einer bevorzugten Ausführungsform enthält die Glaskeramik in Gew.-% auf Oxidbasis:

| | |
|---|---|
| Li₂O | 2,8 - 4, 2 |
| Na₂O+K₂O | 0,2 - 1,5 |
| MgO | 0 - 1,5 |
| CaO+SrO+BaO | 0 - 4 |
| ZnO | 0 - 3,0 |
| B₂O₃ | 0 - 2 |
| Al₂O₃ | 17 - 25 |
| SiO₂ | 60 - 70 |
| TiO₂ | 2,5 - 5, bevorzugt 2,5 - 4 |
| ZrO₂ | 0,5 - 2 |
| P₂O₅ | 0 - 3 |
| SnO₂ | 0,05 - 1 |
| V₂O₅ | >0,01 - 0,09 |
| Fe₂O₃ | 0,03 - 0,3 |
| Cr₂O₃ | 0,0005 - 0,0099 |
| MoO₃ | 0-0,01 |

Eine Glaskeramik dieser Zusammensetzung weist die zuvor beschriebenen optischen Eigenschaften auf. Gleichzeitig zeichnet sich eine Glaskeramik mit dieser Zusammensetzung durch einen sehr niedrigen thermischen Ausdehnungskoeffizienten und eine hohe Temperaturunterschiedsfestigkeit, hohe mechanische Festigkeit und eine hohe chemische Beständigkeit aus, sodass sie sich sehr gut zur Verwendung als Kochfläche eignet. Ferner kann eine solche Glaskeramik auch in anderen Anwendungsszenarien eingesetzt werden, wie beispielsweise als Kaminsichtscheibe, wie zuvor bereits beschrieben.

Neben den genannten Bestandteilen kann eine beispielhafte Glaskeramik weitere Komponenten enthalten, die insbesondere als nicht vermeidbare Verunreinigung in die Glaskeramik eingebracht werden, insbesondere wenn zur Herstellung der Glaskeramik auf Scherben von recycelten Glaskeramiken als Zusatz zum verwendeten Gemenge zurückgegriffen wird. Zu derartigen Verunreinigungen zählen insbesondere As₂O₃, Sb₂O₃, CoO, NiO und CeO₂, die beispielsweise in Gehalten von jeweils bis zu 1000 ppm, vorzugsweise bis zu 500 ppm, besonders bevorzugt bis zu 400 ppm in der Glaskeramik enthalten sein können.

Nach einer weiteren Ausführungsform enthält die Glaskeramik >3,2 Gew.-% Li₂O und/oder <2,2 Gew.-% ZnO. Auf diese Weise kann die Herstellbarkeit der Glaskeramik verbessert werden. So bewirkt ein höherer Gehalt an Li₂O eine bessere Schmelzbarkeit des Grünglases, sowie eine geringere thermische Ausdehnung der Glaskeramik, während ein reduzierter Gehalt an ZnO die Verarbeitung der Glaskeramik erleichtert.

Nach einer weiteren Ausführungsform ist vorgesehen, dass die Summe der Gehalte an TiO₂, ZrO₂ und SnO₂ in der Glaskeramik 3,2-7,5 Gew.-% beträgt. Durch eine Einschränkung der Keimbildner TiO₂, ZrO₂ und SnO₂ auf einen Bereich von wenigstens 3,2 Gew.-% wird eine schnelle Keramisierung begünstigt, indem während der Keimbildungsphase eine ausreichende Zahl an Kristallisierungskeimen erzeugt wird. Gleichzeitig wird durch die Limitierung der Keimbildner auf maximal 7,5 Gew.-% der Glaskeramik sichergestellt, dass die optischen Eigenschaften der Glaskeramik durch eine kontrollierte Keramisierung in dem gewünschten Bereich eingestellt werden können.

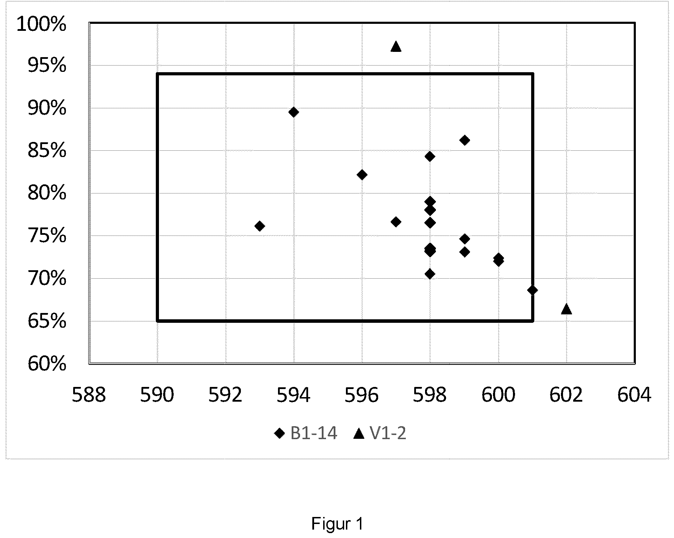

Im Folgenden werden bevorzugte Ausgestaltungen der Erfindung anhand der Figur 1 und unter Bezugnahme auf die in der Tabelle 1 angeführten Beispiele näher erläutert.

In der Tabelle 1 sind dabei sowohl für Vergleichsbeispiele (V1 und V2) aus dem Stand der Technik, als auch für beispielhafte Ausführungsformen (B1 bis B17) erfindungsgemäßer Glaskeramiken die jeweiligen Zusammensetzungen in Gew.-% auf Oxidbasis, sowie die optischen Eigenschaften der Glaskeramiken angegeben. Die hierbei relevanten optischen Eigenschaften der Glaskeramiken sind der spektrale Lichttransmissionsgrad bei einer Dicke der Glaskeramik von 4mm für monochromatische Lichtquellen unterschiedlicher Wellenlängen, der Lichttransmissionsgrad bei einer Dicke der Glaskeramik von 4 mm für Licht der Normlichtart D65, sowie die Farbkoordinaten einer Transmission von Licht der Normlichtart D65 durch ein Substrat der Glaskeramik mit einer Dicke von 4 mm. Die Farbkoordinaten werden dabei in der zuvor beschriebenen Art und Weise durch Angabe der dominanten Wellenlänge (Dom. WL) und der Farbsättigung in % angegeben.

Wie aus der Tabelle 1 ersichtlich wird, weisen alle beispielhaften Glaskeramiken bei Licht der Normlichtart D65 eine Transmission zwischen 1% und 2% auf. Dabei ist die Transmission bzgl. monochromatischem Licht stark abhängig von der Lichtwellenlänge. Während für Licht einer Wellenlänge von 470 nm die Transmission lediglich bei 0,2% bis 0,5% liegt, steigt die Transmission über den roten Spektralbereich bei 600 nm (1,7% bis 3%) bis hin zum nahen Infrarot bei 1600 nm und Transmissionswerten um 73% stark an. Auf diese Weise wird zum einen ein guter Deadfront Effekt erreicht, während gleichzeitig farbige Anzeigen, insbesondere im Bereich roter bis oranger Farben, nutzbar sind.

Dies manifestiert sich auch darin, dass der Farbort von Licht der Normlichtart D65 nach Durchtritt durch die beispielhaften Glaskeramiken durch dominante Wellenlängen im Bereich 594 nm bis 601 nm bei einer Farbsättigung zwischen 69% und 90% gekennzeichnet ist. In der Figur 1 ist dieser Sachverhalt nochmals graphisch dargestellt.

Die Figur 1 zeigt hierzu ein Diagramm, in dem auf der horizontalen Achse die dominante Wellenlänge bei einer Transmission von Licht der Normlichtart D65 durch eine Glaskeramik der Dicke 4 mm aufgetragen ist, während auf der vertikalen Achse die zugehörige Farbsättigung aufgetragen ist. Durch den erfindungsgemäßen Bereich der dominanten Wellenlänge von 590 nm bis 601 nm in Verbindung mit einer Farbsättigung von 65% bis 94% wird dabei ein rechteckiger Bereich aufgespannt, innerhalb dem die jeweiligen Parameter der beispielhaften Glaskeramiken gemäß der Tabelle 1 angeordnet sind. Die beispielhaften Glaskeramiken B1 bis B17 sind dabei jeweils durch einen rautenförmigen Messpunkt dargestellt.

Die entsprechenden Parameter der Vergleichsbeispiele V1 und V2, in der Figur 1 dargestellt durch dreieckige Messpunkte, liegen hingegen außerhalb des erfindungsgemäßen Bereichs. Entsprechende Glaskeramiken weisen dabei entweder eine Farbsättigung auf, die so hoch ist, dass die Farbigkeit von Leuchtanzeigen stark eingeschränkt ist, oder so niedrig ist, dass kein guter Deadfront Effekt erreicht wird. Für die Kombination aus dominanter Wellenlänge und Farbsättigung, die innerhalb des in Figur 1 dargestellten Bereichs vorliegt, wird hingegen ein guter Kompromiss aus Deadfront Effekt und Variierbarkeit der Farbe von Leuchtanzeigen durch eine entsprechende Wahl des Leuchtmittels erzielt.

**Tabelle 1: Zusammensetzung und Eigenschaften von Ausführungsbeispielen (B1 bis B17) und Vergleichsbeispielen (V1, V2)**

| Beispiel | V1 | V2 | B1 | B2 | B3 | B4 | B5 | B6 |
|---|---|---|---|---|---|---|---|---|
| Zusammensetzung (Gew.-%) | | | | | | | | |
| Al₂O₃ | 20,07 | 20,42 | 20,35 | 20,24 | 20,4 | 20,41 | 20,44 | 20,51 |
| BaO | 2,38 | 2,28 | 2,31 | 2,31 | 2,29 | 2,28 | 2,27 | 2,27 |
| CaO | 0,44 | 0,43 | 0,44 | 0,45 | 0,44 | 0,44 | 0,44 | 0,44 |
| CoO | 0,0035 | | | | | | | |
| Cr₂O₃ | 0,024 | <0,0005 | 0,003 | 0,0025 | 0,0018 | 0,0016 | 0,0016 | 0,0015 |
| Fe₂O₃ | 0,13 | 0,09 | 0,111 | 0,11 | 0,11 | 0,111 | 0,11 | 0,11 |
| K₂O | 0,275 | 0,27 | 0,24 | 0,26 | 0,27 | 0,26 | 0,26 | 0,26 |
| Li₂O | 3,87 | 3,77 | 3,84 | 3,79 | 3,83 | 3,89 | 3,89 | 3,91 |
| MgO | 0,351 | 0,31 | 0,31 | 0,31 | 0,31 | 0,31 | 0,31 | 0,31 |
| MnO₂ | 0,026 | 0,02 | 0,019 | 0,02 | 0,02 | 0,022 | 0,022 | 0,022 |
| MoO₃ | <0,005 | 0,0009 | | | | | | |
| Na₂O | 0,5 | 0,61 | 0,61 | 0,63 | 0,64 | 0,65 | 0,64 | 0,64 |
| P₂O₅ | 0,074 | 0,06 | 0,065 | 0,069 | 0,07 | 0,072 | 0,071 | 0,073 |
| SiO₂ | 65,7 | 65,36 | 65,27 | 65,4 | 65,2 | 65,22 | 65,2 | 65,12 |
| SnO₂ | 0,31 | 0,27 | 0,28 | 0,28 | 0,27 | 0,27 | 0,27 | 0,27 |
| SrO | 0,0042 | 0,014 | 0,023 | 0,013 | 0,018 | 0,017 | 0,025 | 0,025 |
| TiO₂ | 2,98 | 3,08 | 3,13 | 3,12 | 3,11 | 3,1 | 3,12 | 3,12 |
| V₂O₅ | 0,022 | 0,023 | 0,02 | 0,02 | 0,021 | 0,021 | 0,024 | 0,023 |
| ZnO | 1,46 | 1,5 | 1,52 | 1,51 | 1,52 | 1,52 | 1,52 | 1,51 |
| ZrO₂ | 1,36 | 1,39 | 1,41 | 1,4 | 1,4 | 1,4 | 1,39 | 1,39 |

| Spektraler Lichttransmissionsgrad bei 4 mm | | | | | | | | |
|---|---|---|---|---|---|---|---|---|
| 470 nm | 0,034 | 0,4 | 0,27 | 0,31 | 0,31 | 0,33 | 0,31 | 0,35 |
| 600 nm | 2,244 | 2,29 | 2,05 | 2,18 | 2,14 | 2,23 | 2,05 | 2,25 |
| 700 nm | 14,877 | 15,88 | 14,52 | 14,98 | 14,91 | 15,23 | 14,7 | 15,58 |
| 950 nm | 62,885 | 69,36 | | | 66,85 | 66,78 | 66,9 | 67,22 |
| 1600 nm | 69,229 | 75,36 | | | 72,65 | 72,63 | 72,84 | 72,66 |

| Lichttransmissionsgrad bei einer Dicke von 4 mm/D65 | | | | | | | | |
|---|---|---|---|---|---|---|---|---|
| Y D65 | 1,2 | 1,4 | 1,2 | 1,3 | 1,3 | 1,3 | 1,2 | 1,4 |

| Farbkoordinaten in Transmission bei einer Dicke von 4 mm/D65 | | | | | | | | |
|---|---|---|---|---|---|---|---|---|
| Dom. WL (nm) | 597 | 602 | 598 | 598 | 599 | 599 | 600 | 600 |
| Sättigung (%) | 97 | 66 | 78 | 76 | 75 | 73 | 72 | 72 |

**Fortsetzung Tabelle 1**

| Beispiel | B7 | B8 | B9 | B10 | B11 | B12 | B13 | B14 |
|---|---|---|---|---|---|---|---|---|
| Zusammenset zung (Gew.-%) | | | | | | | | |
| Al₂O₃ | 20,53 | 20,34 | 20,39 | 20,37 | 20,37 | 20,39 | 20,39 | 20,98 |
| BaO | 2,28 | 2,24 | 2,24 | 2,30 | 2,30 | 2,30 | 2,30 | 1,441 |
| CaO | 0,44 | 0,43 | 0,44 | 0,45 | 0,45 | 0,45 | 0,45 | 0,439 |
| CoO | | <0,001 | <0,001 | | | | | <0,001 |
| Cr₂O₃ | 0,0005 | 0,0024 | 0,0025 | 0,0089 | 0,0047 | 0,0028 | 0,0012 | 0,0056 |
| Fe₂O₃ | 0,111 | 0,109 | 0,108 | 0,113 | 0,112 | 0,112 | 0,114 | 0,121 |
| K₂O | 0,26 | 0,24 | 0,24 | 0,025 | 0,025 | 0,025 | 0,025 | 0,358 |
| Li₂O | 3,83 | 3,91 | 3,82 | 3,82 | 3,79 | 3,79 | 3,81 | 3,89 |
| MgO | 0,31 | 0,31 | 0,32 | 0,31 | 0,31 | 0,30 | 0,30 | 0,3 |
| MnO₂ | 0,021 | 0,022 | 0,02 | 0,028 | 0,028 | 0,028 | 0,028 | 0,021 |
| MoO₃ | 0,0008 | <0,005 | 0,0054 | | | | | 0,0042 |
| Na₂O | 0,62 | 0,61 | 0,62 | 0,62 | 0,62 | 0,63 | 0,62 | 0,538 |
| P₂O₅ | 0,07 | 0,063 | 0,065 | 0,065 | 0,064 | 0,065 | 0,066 | 0,053 |
| SiO₂ | 65,1 | 65,47 | 65,36 | 65,20 | 65,30 | 65,30 | 65,20 | 65,4 |
| SnO₂ | 0,27 | 0,26 | 0,26 | 0,28 | 0,30 | 0,30 | 0,29 | 0,281 |
| SrO | 0,012 | 0,016 | 0,021 | 0,022 | 0,022 | 0,022 | 0,022 | 0,012 |
| TiO₂ | 3,11 | 3,09 | 3,09 | 3,15 | 3,15 | 3,15 | 3,14 | 3,61 |
| V₂O₅ | 0,023 | 0,019 | 0,02 | 0,0195 | 0,0185 | 0,0198 | 0,0207 | 0,017 |
| ZnO | 1,51 | 1,53 | 1,52 | 1,55 | 1,53 | 1,52 | 1,54 | 1,579 |
| ZrO₂ | 1,39 | 1,34 | 1,38 | 1,41 | 1,41 | 1,41 | 1,41 | 0,946 |

| Spektraler Lichttransmissionsgrad bei 4 mm | | | | | | | | |
|---|---|---|---|---|---|---|---|---|
| 470 nm | 0,39 | 0,382 | 0,386 | 0,219 | 0,336 | 0,376 | 0,497 | 0,22 |
| 600 nm | 2,330 | 2,429 | 2,449 | 3,031 | 2,931 | 2,751 | 2,980 | 1,691 |
| 700 nm | 16,17 | 15,657 | 15,697 | 17,611 | 17,605 | 17,109 | 17,803 | 13,096 |
| 950 nm | 67,51 | 67,125 | 67,025 | 67,810 | 67,982 | 67,617 | 67,468 | 66,021 |
| 1600 nm | 72,43 | 72,624 | 72,849 | 73,130 | 73,443 | 73,180 | 72,675 | 69,439 |

| Lichttransmissionsgrad bei einer Dicke von 4 mm/D65 | | | | | | | | |
|---|---|---|---|---|---|---|---|---|
| Y D65 | 1,4 | 1,48 | 1,49 | 1,8 | 1,8 | 1,7 | 1,8 | 1,0 |

| Dominante Wellenlänge und Farbsättigung in Transmission bei einer Dicke von 4 mm/D65 | | | | | | | | |
|---|---|---|---|---|---|---|---|---|
| Dom. WL (nm) | 601 | 598 | 598 | 594 | 596 | 597 | 598 | 598 |
| Sättigung (%) | 69 | 73 | 73 | 90 | 782 | 77 | 71 | 79 |

**Fortsetzung Tabelle 1**

| Beispiel | B15 | B16 | B17 |
|---|---|---|---|
| Zusammenset zung (Gew.-%) | | | |
| Al₂O₃ | 20,57 | 20,95 | 20,88 |
| BaO | 2,44 | 2,25 | 2,21 |
| CaO | 0,63 | 0,44 | 0,44 |
| CoO | 0,001 | 0,0018 | 0,0009 |
| Cr₂O₃ | 0,0048 | 0,0047 | 0,0045 |
| Fe₂O₃ | 0,12 | 0,118 | 0,123 |
| K₂O | 0,71 | 0,266 | 0,266 |
| Li₂O | 2,86 | 3,8 | 3,78 |
| MgO | 1,03 | 0,289 | 0,287 |
| MnO₂ | 0,026 | 0,026 | 0,026 |
| MoO₃ | 0,0017 | 0,0017 | 0,016 |
| Na₂O | 0,57 | 0,6 | 0,6 |
| P₂O₅ | 0,074 | 0,083 | 0,081 |
| SiO₂ | 64,1 | 64,6 | 64,9 |
| SnO₂ | 0,28 | 0,27 | 0,28 |
| SrO | 0,024 | 0,022 | 0,02 |
| TiO₂ | 3,21 | 3,15 | 3,17 |
| V₂O₅ | 0,026 | 0,021 | 0,026 |
| ZnO | 1,83 | 1,62 | 1,54 |
| ZrO₂ | 1,37 | 1,41 | 1,40 |

| Spektraler Lichttransmissionsgrad bei 4 mm | | | |
|---|---|---|---|
| 470 nm | 0,19 | 0,81 | 0,14 |
| 600 nm | 2,00 | 5,45 | 1,63 |
| 700 nm | 14,91 | 24,41 | 13,82 |
| 950 nm | 65,64 | 68,52 | 65,42 |
| 1600 nm | 69,71 | 69,27 | 70,13 |

| Lichttransmissionsgrad bei einer Dicke von 4 mm/D65 | | | |
|---|---|---|---|
| Y D65 | 1,18 | 3,35 | 0,96 |

| Dominante Wellenlänge und Farbsättigung in Transmission bei einer Dicke von 4 mm/D65 | | | |
|---|---|---|---|
| Dom. WL (nm) | 598 | 593 | 599 |
| Sättigung (%) | 84 | 76 | 86 |

## Patentansprüche

1. Eine Lithium-Aluminium-Silikat-Glaskeramik,
a. mit einem Lichttransmissionsgrad im Bereich von 0,5 % bis 10 % bezogen auf eine Dicke von 4 mm,
**dadurch gekennzeichnet, dass**
b. bezogen auf eine Dicke der Glaskeramik von 4 mm Licht der Normlichtart D65 nach Durchtritt durch die Glaskeramik
i. eine dominante Wellenlänge im Bereich von 590 nm bis 601 nm und
ii. eine Farbsättigung von 65 % bis 94 % aufweist.

2. Eine Glaskeramik nach Anspruch 1, **gekennzeichnet durch** eine dominante Wellenlänge im Bereich von 593 bis 601 nm, vorzugsweise von 596 bis 601 nm.

3. Eine Glaskeramik gemäß einem der vorhergehenden Ansprüche, **gekennzeichnet durch** eine Farbsättigung von 67 bis 87 %, vorzugsweise 69 bis 80 %.

4. Eine Glaskeramik nach einem der vorhergehenden Ansprüche, **gekennzeichnet durch** einen Lichttransmissionsgrad im Bereich von 0,5 bis 4,0 %, vorzugsweise im Bereich 0,8 bis 3,0 %, besonders bevorzugt im Bereich 1,0 bis 2,5 % bezogen auf eine Dicke der Glaskeramik von 4 mm.

5. Eine Glaskeramik nach einem der vorhergehenden Ansprüche, **gekennzeichnet durch** einen spektralen Lichttransmissionsgrad im Bereich von 40 % bis 90 %, vorzugsweise im Bereich von 50 % bis 85 %, besonders bevorzugt im Bereich 65 % bis 80 % bei einer Wellenlänge von 1600 nm bezogen auf eine Dicke der Glaskeramik von 4 mm.

6. Eine Glaskeramik nach einem der vorhergehenden Ansprüche, enthaltend 0,0005 - 0,0099 Gew.-% Cr₂O₃, vorzugsweise 0,0010 - 0,0095 Gew.-%, besonders bevorzugt 0,0015 - 0,0090 Gew.-% Cr₂O₃, besonders bevorzugt >0,0025 - 0,0085 Gew.-% Cr₂O₃.

7. Eine Glaskeramik nach einem der vorhergehenden Ansprüche, enthaltend 0,05 - 1 Gew.-%, bevorzugt 0,1 - <0,6 Gew.-% SnO₂, bevorzugt, 0,15 - 0,4 Gew.-% SnO₂, besonders bevorzugt 0,2 - 0,35 Gew.-% SnO₂.

8. Eine Glaskeramik nach einem der vorhergehenden Ansprüche, enthaltend in Gew.-% auf Oxidbasis:
| | |
|---|---|
| Li₂O | 2,8 - 4, 2 |
| Na₂O+K₂O | 0,2 - 1,5 |
| MgO | 0 - 1,5 |
| CaO+SrO+BaO | 0 - 4 |
| ZnO | 0 - 3 |
| B₂O₃ | 0 - 2 |
| Al₂O₃ | 17 - 25 |
| SiO₂ | 60 - 70 |
| TiO₂ | 2,5 - 5 |
| ZrO₂ | 0,5 - 2 |
| P₂O₅ | 0 - 3 |
| SnO₂ | 0,05 - 1 |
| V₂O₅ | >0,01 - 0,09 |
| Fe₂O₃ | 0,03 - 0,3 |
| Cr₂O₃ | 0,0005 - 0,0099 |
| MoO₃ | 0-0,01. |

9. Eine Glaskeramik nach Anspruch 8, enthaltend >3,2 Gew.-% Li₂O und/oder <2,2 Gew.-% ZnO.

10. Eine Glaskeramik nach Anspruch 8 oder 9, wobei die Summe der Gehalte an TiO₂, ZrO₂ und SnO₂ in der Glaskeramik 3,2-7,5 Gew.-% beträgt.
